# EUROPEAN PATENT SPECIFICATION

(11) **EP 3 809 158 B1**
(45) Date of publication and mention of the grant of the patent: **13.12.2023**
(21) Application number: 19878678.2
(22) Date of filing: 28.06.2019
(51) Int. Cl.: G01S 7/52, G01S 15/93

(54) **PROCESSING METHOD AND DEVICE RELATING TO FOREIGN OBJECT COVERING ULTRASONIC RADAR, AND DEVICE**
STABILISIERUNG FÜR PRIVATANZEIGE
PROCÉDÉ ET DISPOSITIF DE TRAITEMENT RELATIF À UN OBJET ÉTRANGER RECOUVRANT UN RADAR À ULTRASONS, ET DISPOSITIF

(30) Priority: 31.10.2018 CN 201811284478
(43) Date of publication of application: 21.04.2021
(73) Proprietor: Guangzhou Xiaopeng Motors Technology Co., Ltd., Tianhe District Guangzhou Guangdong (CN); Guangzhou Chengxing Zhidong Motors Technology Co., Ltd., Guangzhou, Guangdong 510700 (CN)
(72) Inventor: ZHANG, Chaoxin, Guangzhou, Guangdong 510000 (CN); GUAN, Xun, Guangzhou, Guangdong 510000 (CN); LI, Wenxin, Guangzhou, Guangdong 510000 (CN)
(74) Representative: Ran, Handong
(86) International application number: PCT/CN2019/093429
(87) International publication number: WO 2020/087958

(56) References cited:
- EP-A2- 1 410 950
- CN-A- 101 109 815
- CN-A- 102 718 483
- CN-A- 102 749 108
- CN-A- 102 749 109
- CN-A- 103 760 533
- CN-A- 104 634 424
- CN-A- 109 459 742
- DE-A1-102007 059 908
- DE-B3-102013 223 240
- JP-A- 2017 132 285
- US-A1- 2002 023 498

## Description

### TECHNICAL FIELD

The present disclosure relates to the field of vehicle technology, and more particularly, to a processing method and a device based on an ultrasonic radar being covered by a foreign object, and a computer readable storage medium. The invention is set out in the appended set of claims.

### BACKGROUND

Currently, ultrasonic radars have been widely applied to vehicles. Ultrasonic radars set on the outside of the vehicle (for example the front and rear bumper of the vehicle or the lateral outside of the vehicle, etc.) can detect the obstacles around the vehicle. According to the obstacles detected by the ultrasonic radars, an automatic driving strategy for avoiding the obstacles can be generated correspondingly.

In practice, due to the complexity of road conditions and the frequent accidents during driving, it is found that the ultrasonic radars are often covered by foreign objects. For example, the ultrasonic radars are covered by ice scums on ice, mud on slushy roads, or deformed bumper, and so on. When the ultrasonic radars are covered by the foreign objects, the ultrasonic radars cannot accurately detect the obstacles. Thus, the automatic driving strategy generated according to the obstacles has low accuracy, and further, the driving safety is reduced.

Therefore, how to reduce the occurrence of low driving safety caused by the ultrasonic radars being covered by the foreign objects has become an urgent problem to be solved.

DE 102013223240 B3 discloses a method for checking a first ultrasonic sensor of a motor vehicle for an occlusion. A measurement signal of the first ultrasonic sensor is detected by an analysis unit, and the analysis unit determines, according to the measurement signal, a decay time (T, T2) of oscillation caused by an excitation pulse of the membrane of the first ultrasonic sensor. An echo generated by an object arranged in a detection area of the first ultrasonic sensor is determined from the measurement signal or from a measurement signal of a second ultrasonic sensor, and a distance value of the object is determined according to the echo. When the decay time (T, T2) is less than a predetermined limit value and the distance value is less than a preset maximum value, the analysis unit notifies that there is an occlusion. If ice and/or dirt directly adheres to the membrane, the decay time exceeds the preset limit value.

DE 102007059908 A1 discloses a method for functional testing of a mechanical vibration sensor, in particular an ultrasonic sensor, which utilizes the evaluation of the post-vibration process of the vibrating component of the vibration sensor as a function of a variation of the excitation frequency, preferably using the same excitation amplitude, for generating a vibration signal. Once the excitation has been switched off, the vibration component still executes post vibrations. If the excitation frequency is then varied, i.e., if it is selected to be closer to the region of the resonant frequency or farther away from the region of the resonant frequency than the usual operating excitation frequency, then a different behavior of the post-vibration process is to be expected, which is able to be subjected to a more detailed analysis.

EP 1410950 A2 discloses a system for monitoring the close range, the system includes at least one sensor and a control unit. The sensor is an acoustic sensor, in particular an ultrasonic sensor. Fault detection is enabled in such a way that at least one acoustic sensor value can be evaluated by the control unit to determine whether the sensor is fault-free by comparing the at least one measured sensor value with stored values of a normal function of the system. This fault detection can be made once before the actual monitoring process or periodically repeated. By comparing the acoustic sensor values recorded by the sensor itself with values of the same sensor in a normal function, the system recognizes whether any dirt deposits or the like impair the function of the sensor. The natural frequency and the decay time of the acoustic sensor both can be evaluated or analyzed by means of the control unit for fault detection.

US 2002/023498 A1 discloses an obstacle detecting system for vehicles. The system includes an ultrasonic vibrator having a vibration plate and mounted on a vehicle to transmit and receive an ultrasonic wave, and a driver means for driving the ultrasonic vibrator at a predetermined frequency for an ultrasonic wave transmission. The system also includes a detection means for detecting an obstacle in response to an output signal of the ultrasonic vibrator, and a snow check means for checking whether the vibration plate has snow thereon based on a period of reverberating vibration of the vibration plate. A notification means notifies an abnormality of the ultrasonic vibrator arising from snow.

### SUMMARY

The present disclosure provides a processing method and device based on an ultrasonic radar being covered by a foreign object, which can reduce the occurrence of low driving safety caused by the ultrasonic radar being covered by the foreign object, thereby increasing driving safety. The invention is set out in the appended set of claims.

In comparison with current technology, the beneficial effects of the method provided in the embodiments of the present disclosure are as follows.

In the embodiments, a processing device based on an ultrasonic radar being covered by a foreign object detects whether the ultrasonic radar is covered by foreign object, and if yes, outputs a notification information configured to indicate that the ultrasonic radar is covered by the foreign object. Thus, the user can know the inaccuracy of the automatic driving strategy according the ultrasonic radars, thereby reducing the probability of a collision between the vehicle and the obstacle based on the automatic driving strategy, and improving the driving safety.

### BRIEF DESCRIPTION OF THE DRAWINGS

In order to more readily illustrate the technical solutions in the embodiments of the present disclosure, the accompanying drawings which are incorporated in the description are briefly described below. Apparently, the accompanying drawings illustrate some exemplary embodiments of the present disclosure, those skilled in the art can obtain other similar drawings based on the accompanying drawings without paying any creative effort.
FIG. 1 is a flowchart of a processing method based on an ultrasonic radar being covered by a foreign object according to an example useful for understanding the invention but outside the scope of the invention as claimed.
FIG. 2 is a flowchart of a processing method based on an ultrasonic radar being covered by a foreign object according to another example outside the scope of the invention.
FIG. 3 is a flowchart of a processing method based on an ultrasonic radar being covered by a foreign object according to an embodiment of the invention.
FIG. 4 is a structural diagram of a processing device based on an ultrasonic radar being covered by a foreign object according to an example useful for understanding the invention but outside the scope of the invention as claimed.
FIG. 5 is a structural diagram of a processing device based on an ultrasonic radar being covered by a foreign object according to another embodiment of the invention.
FIG. 6 is a structural diagram of a processing device based on an ultrasonic radar being covered by a foreign object according to still another embodiment of the invention.
FIG. 7 is a structural diagram of a processing device based on an ultrasonic radar being covered by a foreign object according to an example useful for understanding the invention but outside the scope of the invention as claimed.
FIG. 8 is a schematic notification interface, when the ultrasonic radar is covered by a foreign object according to an embodiment of the invention.

### DETAILED DESCRIPTION OF PREFERRED EMBODIMENTS

The present disclosure will be described more specifically with reference to the accompanying drawings of the embodiments.

It is noted that the terms "include", "have" and any variation thereof in the embodiments and drawings of the present disclosure are intended to be non-exclusive.

The embodiments of the invention provide a processing method and device based on an ultrasonic radar being covered by a foreign object, which can improve driving safety. The detailed descriptions of the present disclosure will be further described as follows.

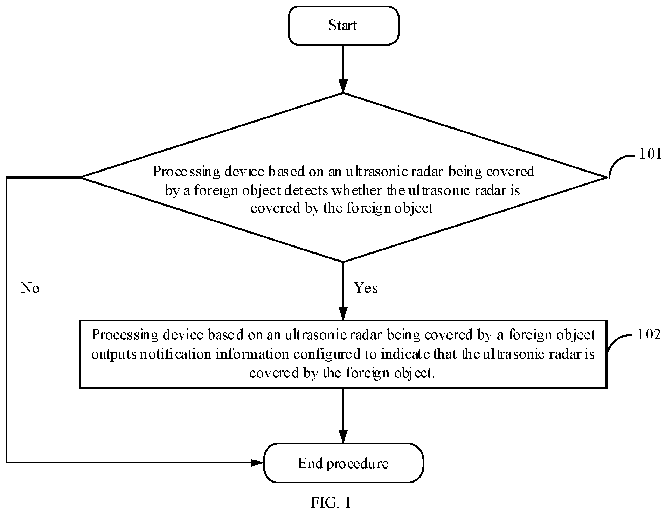

Referring to FIG. 1, FIG. 1 is a schematic flowchart of a processing method based on an ultrasonic radar being covered by a foreign object. This is just an example useful for understanding the invention but outside the scope of the invention as claimed. As illustrated in FIG. 1, the processing method includes the following steps:

101, a processing device based on an ultrasonic radar being covered by a foreign object detects whether the ultrasonic radar is covered by the foreign object, and if yes, execute step 102, and if no, end this procedure.

In the embodiment of the present disclosure, the foreign object covering the ultrasonic radar can include, but is not limited to, ice scum, mud, water drop, bumper, and so on. The foreign object covering the ultrasonic radar is not limited by the embodiment.

102, the processing device outputs a notification information configured to indicate that the ultrasonic radar is covered by the foreign object.

In the embodiment of the present disclosure, the notification information at least includes a notification icon and a notification character.

In one optional example, the processing device outputs the notification information configured to indicate that the ultrasonic radar is covered by the foreign object, which can include the following steps.

The processing device based on the ultrasonic radar being covered by the foreign object controls a display terminal to output a notification interface. The notification interface at least includes a predetermined vehicle simulation image and a number of beams distributed around the predetermined vehicle simulation image. The number of beams correspond to the positions of the ultrasonic radars. The display terminal at least includes a vehicle-mounted display panel or a vehicle-mounted instrument board.

The processing device based on the ultrasonic radar being covered by the foreign object determines a target beam, corresponding to the ultrasonic radar covered by the foreign object, around the predetermined vehicle simulation image.

The processing device based on the ultrasonic radar being covered by the foreign object controls the target beam off, and outputs the notification icon at a target position corresponding to the target beam to indicate that the ultrasonic radar is covered by the foreign object, and outputs the notification character in a predetermined notification region, the notification character is configured to indicate that the ultrasonic radar is covered by the foreign object.

In this optional example, when the ultrasonic radar covered by the foreign object is detected and determined, a corresponding notification interface can be output on the display terminal. Thus, it can be informed to a drive in time that the ultrasonic radar is covered by the foreign object according to the notification interface, and the driver can acquire whether the ultrasonic radar is covered by the foreign object in real-time. In addition, the notification interface can describe the distribution of the ultrasonic radar on the vehicle with visible image such as the predetermined vehicle simulation image and the beams, Furthermore, by outputting the notification icon and changing the display effect of the beams, the ultrasonic radar covered by the foreign object can be shown visually. Thus, the notification information can be more intuitive, more vivid, more suitable for driving vehicle scenes, thereby improving the driving experience.

In another optional example, the processing device based on the ultrasonic radar being covered by the foreign object controls the display terminal to output the notification interface, which can include the following steps.

The processing device based on the ultrasonic radar being covered by the foreign object acquires a current vehicle information and controls the display terminal to output the notification interface, the notification interface includes the predetermined vehicle simulation image corresponding to the vehicle information and a number of the beams distributed around the predetermined vehicle simulation image, the number of beams correspond to the positions of the ultrasonic radars.

In this optional example, different notification interfaces can be used for different vehicles, which are more targeted and more vivid.

In another optional example, after the processing device based on the ultrasonic radar being covered by the foreign object controls the display terminal to output the notification interface, the following steps can also be performed.

The processing device based on the ultrasonic radar being covered by the foreign object acquires a distance information between a number of ultrasonic radars and an obstacle detected by the number of ultrasonic radars.

The processing device based on the ultrasonic radar being covered by the foreign object, according to the distance information, calculates a target distance between the obstacle and the vehicle, and a direction information of the obstacle relative to the vehicle.

The processing device based on the ultrasonic radar being covered by the foreign object outputs the target distance in a specific region on the notification interface, and the specific region corresponds to the direction information.

In this optional example, the position and the direction relationship between the obstacle and the vehicle detected by the ultrasonic radars can be displayed on the notification interface. Thus, the driver can know more about the obstacle, thereby assisting to generate the driving strategy, and improving driving safety.

It is noted that the processing device based on the ultrasonic radar being covered by the foreign object controls the display terminal to output the notification interface when the ultrasonic radar is covered by foreign object, and also when the ultrasonic radar is not covered by foreign object. Specifically, the output conditions can be set by a user. The output conditions are not limited in the embodiment of the present disclosure.

In another optional example, after the processing device based on the ultrasonic radar being covered by the foreign object acquires the distance information between the number of ultrasonic radars and the obstacle detected by the ultrasonic radars, the following step can also be performed.

The processing device based on the ultrasonic radar being covered by the foreign object, according to the distance information, controls the beams corresponding to the ultrasonic radars to be displayed in different display states on the notification interface.

For example, the beams can be controlled to be displayed in different colors according to the distance between the vehicle and the obstacle detected by the ultrasonic radars. Thus, the distance detected by each of the ultrasonic radars can be displayed more intuitively.

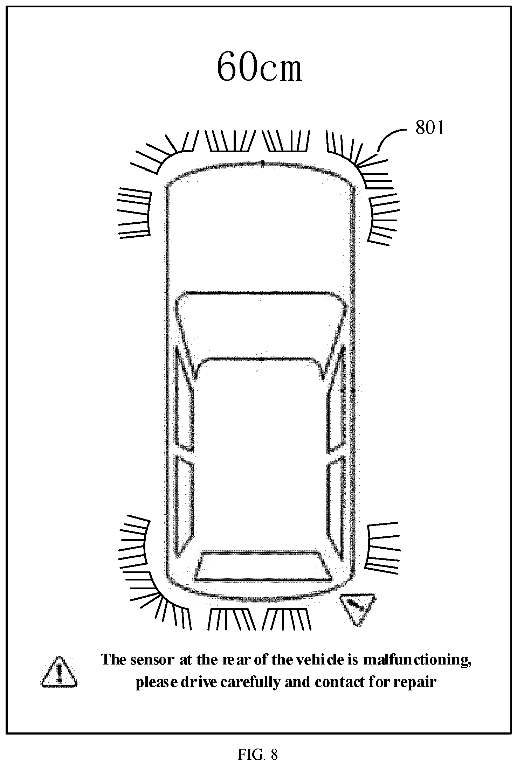

Referring to FIG. 8, FIG. 8 is a schematic notification interface when the ultrasonic radar is covered by the foreign object according to an embodiment of the disclosure. As illustrated in FIG. 8, a number of beams 801 are distributed around the predetermined vehicle simulation image. each beam 801 corresponds to an ultrasonic radar. In FIG. 8, there are six beams 801 distributed in the front of the predetermined vehicle simulation image, and six beams 801 are distributed in the rear of the predetermined vehicle simulation image (the beams at the lower right corner are not shown, and an exclamation mark notification icon is displayed correspondingly). The six beams 801 distributed in the front of the predetermined vehicle simulation image corresponds to the six ultrasonic radars coupled to the front bumper of the vehicle, and the six beams 801 distributed in the front of the predetermined vehicle simulation image corresponds to the six ultrasonic radars coupled to the rear bumper of the vehicle. At the lower right corner of the figure, the exclamation mark notification icon indicates that the ultrasonic radar correspondingly mounted in the position is covered by the foreign object. Correspondingly, the notification character can be displayed at the bottom of FIG. 8. The notification character shown in FIG. 8 is "The sensor at the rear of the vehicle is malfunctioning, please drive carefully and contact for repair". It is noted that, FIG. 8 is only used as an example. Generally, the notification character may include, but is not limited to, the above notification character. The position of the notification character is not limited to the position of the notification character in FIG. 8. The "60cm" in the upper middle of the notification interface shown in FIG. 8 is used to indicate the distance between the obstacle detected by the six ultrasonic radars coupled to the front bumper of the vehicle and the front bumper of the vehicle. Optionally, the distance between the obstacle detected by the six ultrasonic radars coupled to the rear bumper of the vehicle and the rear bumper of the vehicle can also be displayed in the lower middle of the notification interface shown in FIG. 8.

Therefore, by implementing the processing method described in FIG. 1, the processing device detects whether the ultrasonic radar is covered by the foreign object, and if yes, the processing device outputs the notification information configured to indicate that the ultrasonic radar is covered by the foreign object. When the ultrasonic radar is covered by the foreign object, the notification information is outputted. Thus, the user can know the inaccuracy of the automatic driving strategy according the ultrasonic radars, thereby reducing the probability of a collision between the vehicle and the obstacle based on the automatic driving strategy, and improving the driving safety.

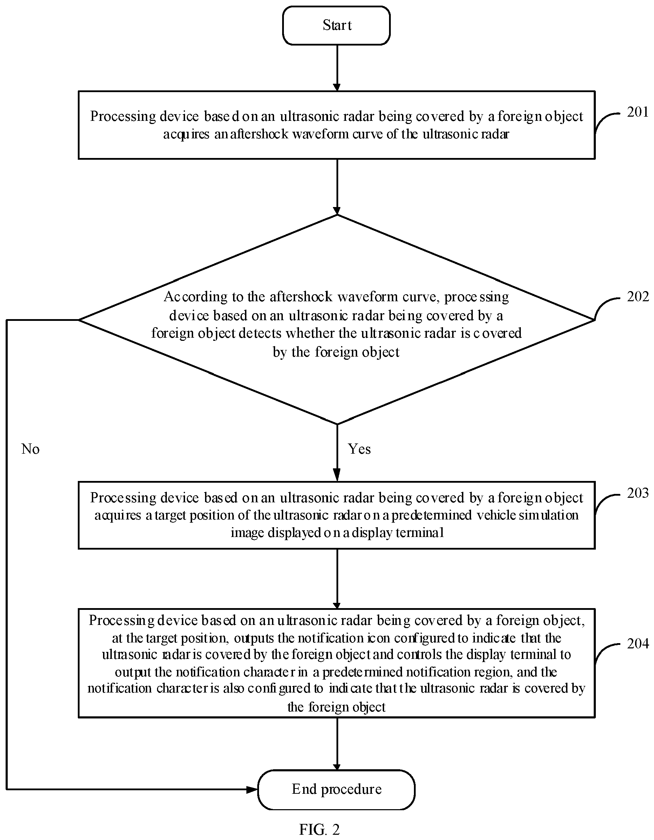

Referring to FIG. 2, FIG. 2 is a schematic flowchart of a processing method based on an ultrasonic radar being covered by a foreign object. This is just an example useful for understanding the invention but outside the scope of the invention as claimed. The processing method includes the following steps.

201, a processing device based on an ultrasonic radar being covered by a foreign object acquires an aftershock waveform curve of the ultrasonic radar.

The In aftershock waveform curve is used to represent the change of a ringtime over a period of time. It is noted that the aftershock waveform changes with time. When detecting whether the ultrasonic radar is covered by foreign object, the aftershock waveform curve corresponding to the current detecting time is acquired. Thus, the real-time aftershock waveform curve is acquired. Therefore, the accuracy of detecting whether the ultrasonic radar is covered by the foreign object can be increased. In another optional example, in practical applications, the last acquired aftershock waveform curve of the ultrasonic radar can be stored, and the next aftershock waveform curve of the ultrasonic radar can be acquired after a predetermined interval time so as to reduce the workload. The predetermined interval time may be arranged according to the required accuracy.

In one optional example, the processing device acquires the aftershock waveform curve of the ultrasonic radar after the predetermined interval time, which can include the following steps.

The processing device based on the ultrasonic radar being covered by the foreign object determines whether the time difference between the time of acquiring the last acquired aftershock waveform curve and a current time is greater than the predetermined time.

If yes, the processing device based on the ultrasonic radar being covered by the foreign object acquires the aftershock waveform curve of the ultrasonic radar at the current time.

If not, the processing device based on the ultrasonic radar being covered by the foreign object acquires the last acquired aftershock waveform curve of the ultrasonic radar.

In this optional example, if the time difference between the time of acquiring the last acquired aftershock waveform curve and the current time is greater than the predetermined time, the aftershock waveform curve of the ultrasonic radar at the current time is acquired. If the time difference between the time of acquiring the stored last acquired aftershock waveform curve and current time is smaller than the predetermined time, the last acquired aftershock waveform curve of the ultrasonic radar is acquired. Thus, the workload can be reduced when the accuracy of detecting the ultrasonic radar covered by the foreign object is assured.

202, according to the aftershock waveform curve, the processing device based on the ultrasonic radar being covered by the foreign object determines whether the ultrasonic radar is covered by the foreign object, and if yes, execute steps 203-204, and if not, end of this procedure.

When the ultrasonic radar is not covered by the foreign object, the ringtime corresponding to the aftershock waveform curve may approach to a predetermined normal ringtime. When the ultrasonic radar is not covered by the foreign object, there will be a larger deviation between the ringtime corresponding to the aftershock waveform curve and the predetermined normal ringtime. Therefore, according to the aftershock waveform curve, it is determined whether the ultrasonic radar is covered by the foreign object.

203, the processing device based on the ultrasonic radar being covered by the foreign object acquires a target position of the ultrasonic radar on a predetermined vehicle simulation image displayed on a display terminal.

The target position is near to the missing beams at the lower right corner of FIG. 8.

204, at the target position, the processing device based on the ultrasonic radar being covered by the foreign object outputs the notification icon configured to indicate that the ultrasonic radar is covered by the foreign object and controls the display terminal to output the notification character in a predetermined notification region, and the notification character is also configured to indicate that the ultrasonic radar is covered by the foreign object.

In the processing method described in FIG. 2, when the ultrasonic radar is covered by the foreign object, the notification information is outputted. Thus, the user can know the inaccuracy of the automatic driving strategy according the ultrasonic radars, thereby reducing the probability of a collision between the vehicle and the obstacle based on the automatic driving strategy, and improving the driving safety.

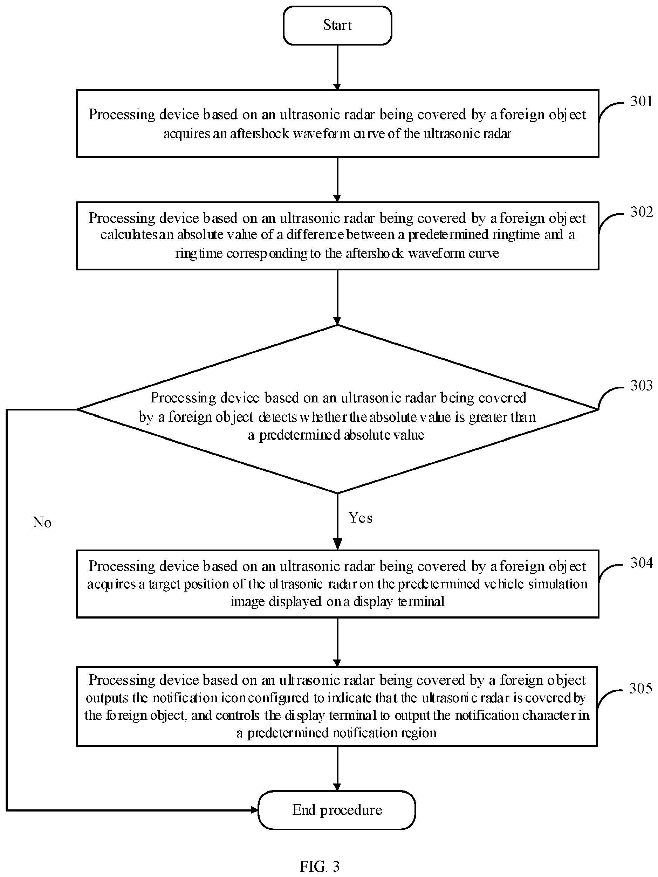

Referring to FIG. 3, FIG.3 is a schematic flowchart of a processing method based on an ultrasonic radar being covered by a foreign object according to an embodiment of the invention. The processing method can include the following steps.

301, the processing device based on the ultrasonic radar being covered by the foreign object acquires an aftershock waveform curve of the ultrasonic radar.

302, the processing device based on the ultrasonic radar being covered by the foreign object calculates an absolute value of a difference between a predetermined ringtime and a ringtime corresponding to the aftershock waveform curve.

In the present embodiment, the predetermined ringtime is a ringtime when the ultrasonic radar is not covered by the foreign object. The ringtime corresponding to the aftershock waveform curve is a ringtime that the aftershock waveform curve approaches to. In addition, the ringtime corresponding to the aftershock waveform curve can be a ringtime of a rising edge of the aftershock waveform curve, correspondingly the predetermined ringtime can be a predetermined standard ringtime of a rising edge. The ringtime corresponding to the aftershock waveform curve can also be a ringtime of a failing edge of the aftershock waveform curve, correspondingly the predetermined ringtime can be predetermined standard ringtime of a failing edge. The ringtime corresponding to the aftershock waveform curve can also be a ringtime of a rising edge of the aftershock waveform curve and a ringtime of failing edge of the aftershock waveform curve, correspondingly the predetermined ringtime can be a predetermined standard ringtime of a rising edge and a predetermined standard ringtime of a failing edge. Furthermore, when the predetermined ringtime is the predetermined standard ringtime of the rising edge and the predetermined standard ringtime of the failing edge, an absolute value of a difference between the ringtime and the predetermined ringtime includes a first absolute value of a difference between the ringtime of the rising edge and the predetermined standard ringtime of the rising edge, and a second absolute value of a difference between the ringtime of the failing edge and the predetermined standard ringtime of the failing edge. A predetermined absolute value can also include a first predetermined absolute value corresponding to the first absolute value and a second predetermined absolute value corresponding to the second absolute value. Preferably, in this present disclosure, the ringtime corresponding to the aftershock waveform curve is the ringtime of the rising edge, and the predetermined ringtime is the predetermined standard ring time of the rising edge. Thus, reliable determination results can be acquired and determination workloads can be reduced.

303, the processing device based on the ultrasonic radar being covered by the foreign object determines whether the absolute value is greater than the predetermined absolute value; if yes, it is determined that the ultrasonic radar is covered by the foreign object, and the steps 304-305 are executed; if not, it is determined that the ultrasonic radar is not to be covered by the foreign object, and end this procedure.

After the processing device based on the ultrasonic radar being covered by the foreign object determines the absolute value is greater than a predetermined absolute value, the following steps also are performed.

The processing device based on the ultrasonic radar being covered by the foreign object determines whether the ringtime is greater than a predetermined ringtime;

if yes, the processing device based on the ultrasonic radar being covered by the foreign object looks up the foreign object corresponding to the absolute value in a first foreign object database when the ringtime is greater than the predetermined ringtime;

if not, the processing device based on the ultrasonic radar being covered by the foreign object looks up the foreign object corresponding to the absolute value in the second foreign object database when the ringtime is less than the predetermined ringtime;

the processing device based on the ultrasonic radar being covered by the foreign object stars a foreign object cleaning method corresponding to the foreign object so as to clean the foreign object.

The foreign object is determined according to the ringtime and the predetermined ringtime. Therefore, a suitable cleaning method is applied to the foreign object, and the foreign object covering the ultrasonic radar is automatically cleaned. A more automated clean of the foreign object can be realized.

304, the processing device based on the ultrasonic radar being covered by the foreign object acquires a target position of the ultrasonic radar on the predetermined vehicle simulation image displayed on a display terminal.

305, at the target position, the processing device based on the ultrasonic radar being covered by the foreign object outputs the notification icon configured to indicate that the ultrasonic radar is covered by the foreign object, and controls the display terminal to output the notification character in a predetermined notification region.

Referring to Table 1 and Table 2, when a vehicle is parked on the side of the vehicle having the ultrasonic radar, the table 1 is a ringtime table corresponding to the ultrasonic radar being covered by the foreign object, and when vehicles are parked in the front and rear of the vehicle having the ultrasonic radar,
table 2 is a ringtime table corresponding to the ultrasonic radar being covered by the foreign object. In the
table 1, the RT1 represents the ringtime of the rising edge of the aftershock waveform curve of the ultrasonic radar covered by different foreign objects, and the RT2 represents the ringtime of the failing edge of the aftershock waveform curve of the ultrasonic radar covered by different foreign objects. In the
table 2, the RT1 represents the ringtime of the rising edge of the aftershock waveform curve of the ultrasonic radar covered by different foreign objects, and the RT2 represents the ringtime of the failing edge of the aftershock waveform curve of the ultrasonic radar covered by different foreign objects.
Furthermore, when the vehicle is parked on the side of the vehicle having the ultrasonic radar, the normal RT1 of the ultrasonic radar is in a range from 1.4ms to 1.82ms and the normal RT2 is less than 0.3ms.
when vehicles are parked in the front and rear of the vehicle having the ultrasonic radar, the normal RT1 of the ultrasonic radar is in a range from 1.2ms to 1.6ms and the normal RT2 is less than 0.3ms.

**Table 1**

| | RT1 (ms) | RT2 (ms) |
|---|---|---|
| Normal mode | 1.65 | 0.23 |
| Water drop mode | 1.88 | 0.24 |
| Finger light pressure mode | 1.41 | 0.71 |
| Finger heavy pressure mode | 1.18 | 0 |
| Yellow paper covering mode | 1.65 | 0.12 |
| White paper covering mode | 1.53 | 0.35 |
| Transparent glue covering mode | 1.65 | 0.71 |
| Mud covering mode | 1.3 | 0.11 |
| Leaf covering mode | 1.65 | 0.59 |
| Ice covering mode | 1.3 | 0.11 |

**Table 2**

| | RT1 (ms) | RT2 (ms) |
|---|---|---|
| Normal mode | 1.44 | 0.12 |
| Water drop mode | 1.39 | 0.21 |
| Finger light pressure mode | 0.82 | 0.41 |
| Finger heavy pressure mode | 0.57 | 0.74 |
| Yellow paper covering mode | 1.35 | 0.13 |
| White paper covering mode | 1.35 | 0.17 |
| Transparent glue covering mode | 1.39 | 0.17 |
| Mud covering mode | 0.94 | 0.37 |
| Leaf covering mode | 2.66 | 1.48 |
| Ice covering mode | 1.11 | 0.16 |

As shown in Table 1 and Table 2, when the ultrasonic radar is in different covering modes (water mode, finger light pressure mode, finger heavy pressure mode, yellow paper covering mode, white paper covering mode, transparent glue covering mode, mud covering mode, leaf covering mode and ice covering mode), the difference between the ringtime of the rising edge of the aftershock waveform curve and the ringtime of the rising edge of the aftershock waveform curve in the normal mode is relatively great, which is not in the corresponding range of the normal ringtime. According to the above ringtime it can be concluded that when the ringtime of the rising edge of the aftershock waveform curve of the ultrasonic radar is greatly different from the normal ringtime of the rising edge, the ultrasonic radar is covered by the foreign object. In another example, the difference between the ringtime of the falling edge of the aftershock waveform curve and the normal ringtime of the falling edge can also be used to determine whether the ultrasonic radar is covered by foreign object. Preferably, in this present disclosure, the ringtime of the rising edge is used, and thus a reliable determination result can be obtained and a calculation amount can be reduced.

In the processing method described in FIG. 3, when the ultrasonic radar is covered by the foreign object, the notification information is outputted. Thus, the user can know the inaccuracy of the automatic driving strategy according the ultrasonic radars, thereby reducing the probability of a collision between the vehicle and the obstacle based on the automatic driving strategy, and improving the driving safety.

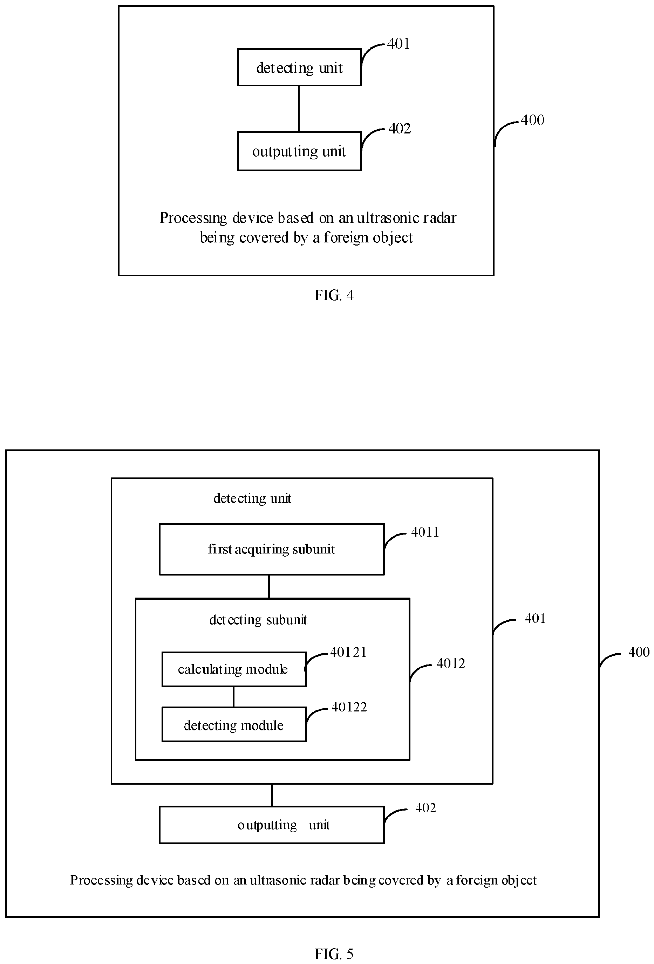

Referring to FIG. 4, FIG. 4 is a structural diagram of a processing device based on an ultrasonic radar being covered by a foreign object. This is just an example useful for understanding the invention but outside the scope of the invention as claimed. As illustrated in FIG. 4, the device 400 includes:
a detecting unit 401, configured to detect whether the ultrasonic radar is covered by the foreign object.
an outputting unit 402, configured to output a notification information when the detecting unit 401 detects the ultrasonic radar is covered by the foreign object, the notification information being configured to indicate that the ultrasonic radar is covered by the foreign object.

In the present embodiment, the notification information at least includes a notification icon and a notification character.

In one optional example, the outputting unit 402 outputting the notification information when the ultrasonic radar is covered by the foreign object, the outputting unit 402 can also be configured to perform as follows.

The outputting unit 402 controls a display terminal to output a notification interface. The notification interface at least includes a predetermined vehicle simulation image and a number of beams distributed around the predetermined vehicle simulation image. The number of beams correspond to the positions of the ultrasonic radars. The display terminal at least includes a vehicle-mounted display panel or a vehicle-mounted instrument board.

The outputting unit 402 determines a target beam, corresponding to the ultrasonic radar covered by the foreign object, around the predetermined vehicle simulation image.

The outputting unit 402 controls the target beam off, and outputs the notification icon at a target position corresponding to the target beam to indicate that the ultrasonic radar is covered by the foreign object, and outputs the notification character in a predetermined notification region, the notification character is configured to indicate that the ultrasonic radar is covered by the foreign object.

In this example, when detecting a ultrasonic radar covered by foreign object, the processing device outputs a corresponding notification interface in the display terminal, Thus, it can be informed to a drive in time that the ultrasonic radar is covered by the foreign object according to the notification interface, and the driver can acquire whether the ultrasonic radar is covered by the foreign object in real-time. In addition, the notification interface can describe the distribution of the ultrasonic radar on the vehicle with visible image such as the predetermined vehicle simulation image and the beams, Furthermore, by outputting the notification icon and changing the display effect of the beams, the ultrasonic radar covered by the foreign object can be shown visually. Thus, the notification information can be more intuitive, more vivid, more suitable for driving vehicle scenes, thereby improving the driving experience.

In another optional example, the outputting unit 402 controls the display terminal to output the notification interface, the outputting unit 402 can also be configured to perform as follow:

The outputting unit 402 acquires a current vehicle information and controls the display terminal to output the notification interface, the notification interface includes the predetermined vehicle simulation image corresponding to the vehicle information and a number of the beams distributed around the predetermined vehicle simulation image, the number of beams correspond to the positions of the ultrasonic radars.

In this optional example, different notification interfaces can be used for different vehicles, which are more targeted and more vivid.

In another optional example, after the outputting unit 402 controls the display terminal to output the notification interface, the outputting unit 402 can also be configured to perform as follows.

The outputting unit 402 acquires a distance information between a number of ultrasonic radars and an obstacle detected by the number of ultrasonic radars.

The outputting unit 402, according to the distance information, calculates a target distance between the obstacle and the vehicle, and a direction information of the obstacle relative to the vehicle.

The outputting unit 402 outputs the target distance in a specific region on the notification interface, and the specific region corresponds to the direction information.

In this optional example, the position and the direction relationship between the obstacle and the vehicle detected by the ultrasonic radars can be displayed on the notification interface. Thus, the driver can know more about the obstacle, thereby assisting to generate the driving strategy, and improving driving safety.

It is noted that the processing device based on the ultrasonic radar being covered by the foreign object controls the display terminal to output the notification interface when the ultrasonic radar is covered by foreign object, and also when the ultrasonic radar is not covered by foreign object. Specifically, the output conditions can be set by a user. The output conditions are not limited in the embodiment of the present disclosure.

In another optional example, after the outputting unit 402 acquires the distance information between the number of ultrasonic radars and the obstacle detected by the ultrasonic radars, the outputting unit 402 can also be configured to perform as follows.

The outputting unit 402, according to the distance information, controls the beams corresponding to the ultrasonic radars to be displayed in different display states on the notification interface.

For example, the beams can be controlled to be displayed in different colors according to the distance between the vehicle and the obstacle detected by the ultrasonic radars. Thus, the distance detected by each of the ultrasonic radars can be displayed more intuitively.

Therefore, by implementing the processing device described in FIG. 4, the notification information is outputted when the ultrasonic radar being covered by the foreign object. Thus, the user can know the inaccuracy of the automatic driving strategy according the ultrasonic radars, thereby reducing the probability of a collision between the vehicle and the obstacle based on the automatic driving strategy, and improving the driving safety.

Referring to FIG. 5, FIG. 5 is a structural diagram of a processing device based on an ultrasonic radar being covered by a foreign object according to another embodiment of the invention. The processing device 400 based on the ultrasonic radar being covered by the foreign object in FIG. 5 is optimized from the processing device 400 based on the ultrasonic radar being covered by the foreign object in FIG. 4. The detecting unit 401 of the processing device 400 in FIG. 5 includes a first acquiring subunit 4011 and a detecting subunit 4012.

The first acquiring subunit 4011 is configured to acquire an aftershock waveform curve of the ultrasonic radar.

The first acquiring subunit 4011 acquires the aftershock waveform curve of the ultrasonic radar. The first acquiring subunit 4011 can also be configured to perform as follows.

The first acquiring subunit 4011 determines whether the time difference between the time of acquiring the last acquired aftershock waveform curve and a current time is greater than the predetermined time.

If yes, the first acquiring subunit 4011 acquires the aftershock waveform curve of the ultrasonic radar at the current time.

If no, the first acquiring subunit 4011 acquires the last acquired aftershock waveform curve of the ultrasonic radar.

In this optional example, if the time difference between the time of acquiring the last acquired aftershock waveform curve and the current time is greater than the predetermined time, the aftershock waveform curve of the ultrasonic radar at the current time is acquired. If the time difference between the time of acquiring the stored last acquired aftershock waveform curve and current time is smaller than the predetermined time, the last acquired aftershock waveform curve of the ultrasonic radar is acquired. Thus, the workload can be reduced when the accuracy of detecting the ultrasonic radar covered by the foreign object is assured.

The detecting subunit 4012, according to the aftershock waveform curve acquired by the first acquiring subunit 4011, is configured to detect whether the ultrasonic radar is covered by the foreign object.

The detecting subunit 4012 include a calculating module 40121 and a detecting module 40122.

The calculating module 40121 is configured to calculate the absolute value of the difference between the predetermined ringtime and the ringtime corresponding to the aftershock waveform curve, the predetermined ringtime is a ringtime when the ultrasonic radar is not covered by the foreign object.

The detecting module 40122 is configured to detect whether the absolute value calculated by the calculation module 40121 is greater than the predetermined absolute value. The ultrasonic radar is determined to be covered by the foreign object when the absolute value is greater than the predetermined absolute value, and the ultrasonic radar is determined to be not covered by the foreign object when the absolute value is not greater than the predetermined absolute value.

After the detection module 40122 detects that the absolute value is greater than the predetermined absolute value, the detection module 40122 also is configured to perform as follows.

The detection module 40122 detects whether the ringtime is greater than the predetermined ringtime.

If yes, the detection module 40122 looks up the foreign object corresponding to the absolute value in the first foreign object database when the ringtime is greater than the predetermined ringtime;
If no, the detection module 40122 looks up the foreign object corresponding to the absolute value in the second foreign object database when the ringtime is less than the predetermined ringtime;
The detection module 40122 stars a foreign object cleaning method corresponding to the foreign object so as to clean the foreign object.

The foreign object is determined according to the ringtime and the predetermined ringtime. Therefore, a suitable cleaning method is applied to the foreign object, and the foreign object covering the ultrasonic radar is automatically cleaned. A more automated clean of the foreign object can be realized.

In the processing device described in FIG. 5, when the ultrasonic radar is covered by the foreign object, the notification information is outputted. Thus, the user can know the inaccuracy of the automatic driving strategy according the ultrasonic radars, thereby reducing the probability of a collision between the vehicle and the obstacle based on the automatic driving strategy, and improving the driving safety.

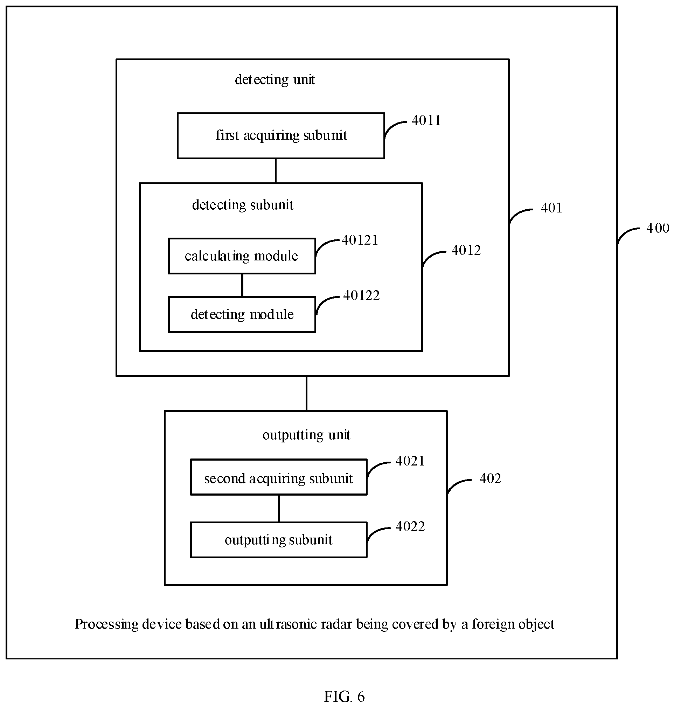

Referring to FIG. 6, FIG. 6 is a structural diagram of a processing device based on an ultrasonic radar being covered by a foreign object according to still another embodiment of the invention. The processing device 400 based on the ultrasonic radar being covered by the foreign object in FIG. 6 is optimized from the processing device 400 based on the ultrasonic radar being covered by the foreign object in FIG. 5. The outputting unit 402 of the processing device 400 in FIG. 6 further includes a second acquiring subunit 4021 and an outputting subunit 4022.

The second acquiring subunit 4021 is configured to acquire the target position of the ultrasonic radar on the predetermined vehicle simulation image displayed on the display terminal.

The outputting subunit 4022 is configured to output, at the target position acquired by the second acquiring subunit 4021, the notification icon configured to indicate that the ultrasonic radar is covered by the foreign object, and to control the display terminal to output the notification character in the predetermined notification region. The notification character is configured to indicate that the ultrasonic radar is covered by the foreign object.

In the processing method described in FIG. 6, when the ultrasonic radar is covered by the foreign object, the notification information is outputted. Thus, the user can know the inaccuracy of the automatic driving strategy according the ultrasonic radars, thereby reducing the probability of a collision between the vehicle and the obstacle based on the automatic driving strategy, and improving the driving safety.

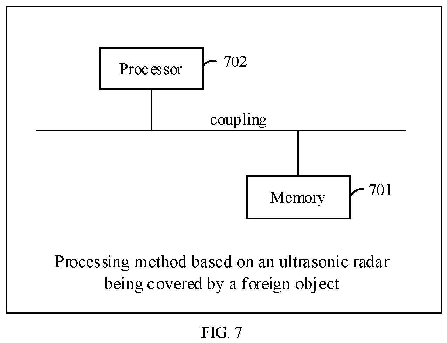

Referring to FIG. 7, FIG. 7 is a structural diagram of a processing device based on an ultrasonic radar being covered by a foreign object according to an example useful for understanding the invention but outside the scope of the invention as claimed. The processing device based on the ultrasonic radar being covered by the foreign object can include:
a memory 701 configured to store executable program;
a processor 702 coupled to the memory 701.

The processor 702 is configured to invoke executable program stored in the memory 701 and perform the processing method based on the ultrasonic radar being covered by the foreign object illustrated in FIG. 1 to FIG. 3.

The embodiment of the present disclosure provides a computer readable storage medium. The computer program is executed by a computer to perform the processing method based on the ultrasonic radar being covered by the foreign object illustrated in FIG. 1 to FIG. 3.

The embodiment of the invention provides a computer application. A computer can perform part or all of the steps of method of any of the embodiments of the present disclosure when the computer application is executed by the computer.

The present disclosure provides an application publishing platform, which is an example useful for understanding the invention but outside the scope of the invention as claimed. A computer can perform part or all of the steps of method of any of the embodiments of the present disclosure when the computer application is executed by a computer.

In these various embodiments of the present disclosure, it is noted that the sequence numbers of the aforementioned processes do not mean the necessary sequence of execution.

## Claims

1. A processing method based on an ultrasonic radar being covered by a foreign object, comprising:
detecting (101) whether the ultrasonic radar is covered by the foreign object, comprising:
acquiring (201, 301) a waveform curve of aftershocks of the ultrasonic radar; and
detecting (202), according to the waveform curve of the aftershocks, whether the ultrasonic radar is covered by the foreign object,
when the result of the detecting (202) is yes, outputting (102) a notification information configured to indicate that the ultrasonic radar is covered by the foreign object;
wherein after the result of the detecting (202) is yes, the method is **characterized by** further comprising:
determining whether a ringtime corresponding to the waveform curve of the aftershocks is greater than a predetermined ringtime;
determining the foreign object that covers the ultrasonic radar belongs to a first foreign object database in response to the ringing time is greater than the predetermined ringtime; and
determining the foreign object that covers the ultrasonic radar belongs to a second foreign object database in response to the ringing time is no greater than the predetermined ringtime; and
starting a foreign object cleaning method corresponding to a determined foreign object database to remove the foreign object from the ultrasonic radar, wherein the determined foreign object database is one of the first and second foreign object databases, which the foreign object belongs to.

2. The method as claimed in claim 1, wherein the notification information at least comprises a notification icon and a notification character.

3. The method according to claim 2, wherein outputting (102) the notification information configured to indicate that the ultrasonic radar is covered by the foreign object comprises:
acquiring (304) a target position of the ultrasonic radar on a predetermined vehicle simulation image displayed on a display terminal;
outputting (305), at the target position, the notification icon configured to indicate that the ultrasonic radar is covered by the foreign object, and controlling the display terminal to output the notification character in a predetermined notification region, wherein the notification character is configured to indicate that the ultrasonic radar is covered by the foreign object.

4. The method according to claim 3, wherein acquiring the target position of the ultrasonic radar on the predetermined vehicle simulation image displayed on the display terminal comprises:
acquiring a current vehicle information;
controlling the display terminal to output a notification interface, the notification interface comprising the predetermined vehicle simulation image corresponding to the current vehicle information; and
acquiring, on the predetermined vehicle simulation image, the target position corresponding to the ultrasonic radar.

5. The method according to claim 3, wherein outputting, at the target position, the notification icon configured to indicate that the ultrasonic radar is covered by the foreign object, and controlling the display terminal to output the notification character in the predetermined notification region comprises:
controlling the display terminal to output a notification interface, the notification interface at least comprising the predetermined vehicle simulation image and the plurality of beams being distributed around the predetermined vehicle simulation image and corresponding to the positions of the ultrasonic radars;
determining a target beam, corresponding to the ultrasonic radar covered by the foreign object, from the plurality of beams around the predetermined vehicle simulation image; and
controlling the target beam off, and outputting the notification icon at the target position corresponding to the target beam to indicate that the ultrasonic radar is covered by the foreign object.

6. The method according to claim 1, wherein the acquiring (201, 301) a waveform curve of aftershocks of the ultrasonic radar, comprises:
determining whether a time difference between a time of acquiring a last acquired waveform curve of aftershocks of the ultrasonic radar and a current time is greater than a predetermined time;
acquiring the waveform curve of aftershocks of the ultrasonic radar at the current time in response to the time difference is greater than the predetermined time; and
acquiring the last acquired waveform curve of aftershocks of the ultrasonic radar in response to the time difference is no greater than the predetermined time.

7. A processing device (400) based on an ultrasonic radar being covered by a foreign object, comprising:
a detecting unit (401), configured to detect whether the ultrasonic radar is covered by the foreign object; and
an outputting unit (402), configured to output a notification information when the ultrasonic radar is covered by the foreign object, the notification information being configured to indicate that the ultrasonic radar is covered by the foreign object;
wherein the detecting unit (401) comprises:
a first acquiring subunit (4011), configured to acquire a waveform curve of aftershocks of the ultrasonic radar; and
a detecting subunit (4012), configured to detect, according to the waveform curve of the aftershocks, whether the ultrasonic radar is covered by the foreign object;
wherein after the ultrasonic radar is covered by the foreign object, the detecting module (40122) is **characterized by** being further configured to:
determine whether a ringtime corresponding to the waveform curve of the aftershocks is greater than a predetermined ringtime;
determine the foreign object that covers the ultrasonic radar belongs to a first foreign object database in response to the ringing time is greater than the predetermined ringtime;
determine the foreign obj ect that covers the ultrasonic radar belongs to a second foreign object database in response to the ringing time is no greater than the predetermined ringtime; and
start a foreign object cleaning method corresponding to a determined foreign object database to remove the foreign object from the ultrasonic radar, wherein the determined foreign object database is one of the first and second foreign object databases, which the foreign object belongs to.

8. The device (400) as claimed in claim 7, wherein the notification information at least comprises a notification icon and a notification character.

9. The device (400) of claim 8, wherein the outputting unit (402) comprises:
a second acquiring subunit (4021), configured to acquire a target position of the ultrasonic radar on a predetermined vehicle simulation image displayed on a display terminal;
an outputting subunit (4022), configured to output, at the target position, the notification icon configured to indicate that the ultrasonic radar is covered by the foreign object,
and control the display terminal to output the notification character in a predetermined notification region, wherein the notification character is configured to indicate that the ultrasonic radar is covered by the foreign object.

10. The device (400) according to claim 9, wherein the second acquiring subunit (4022) is configured to:
acquire a current vehicle information;
control the display terminal to output a notification interface, the notification interface comprising the predetermined vehicle simulation image corresponding to the current vehicle information; and
acquire, on the predetermined vehicle simulation image, the target position corresponding to the ultrasonic radar.

11. The device (400) according to claim 9, wherein the outputting subunit (402) is configured to:
control the display terminal to output a notification interface, the notification interface at least comprising the predetermined vehicle simulation image and a plurality of beams being distributed around the predetermined vehicle simulation image and corresponding to the positions of the ultrasonic radars;
determine a target beam, corresponding to the ultrasonic radar covered by the foreign object, from the plurality of beams around the predetermined vehicle simulation image; and
control the target beam off, and output the notification icon at the target position corresponding to the target beam to indicate that the ultrasonic radar is covered by the foreign object.

12. The device (400) according to claim 7, wherein the first acquiring subunit (4011) is specifically configured to:
determine whether a time difference between a time of acquiring a last acquired waveform curve of aftershocks of the ultrasonic radar and a current time is greater than a predetermined time;
acquire the waveform curve of aftershocks of the ultrasonic radar at the current time in response to the time difference is greater than the predetermined time; and
acquire the last acquired waveform curve of aftershocks of the ultrasonic radar in response to the time difference is no greater than the predetermined time.

13. A computer readable storage medium, configured to store a computer program, the computer program being executed by a computer to perform the processing method as claimed in any one of claims 1-6 by a device as claimed in any of the claims 7-12.

## Patentansprüche

1. Verarbeitungsverfahren, das darauf basiert, dass ein Ultraschallradar durch ein Fremdobjekt verdeckt wird, das Folgendes beinhaltet:
Erkennen (101), ob das Ultraschallradar durch das Fremdobjekt verdeckt wird, das Folgendes beinhaltet:
Erfassen (201, 301) einer Wellenformkurve von Nachbeben des Ultraschallradars; und
Erkennen (202), gemäß der Wellenformkurve der Nachbeben, ob das Ultraschallradar durch das Fremdobjekt verdeckt wird,
Ausgeben (102), wenn das Ergebnis des Erkennens (202) ja ist, einer Benachrichtigungsinformation, konfiguriert zum Anzeigen, dass das Ultraschallradar durch das Fremdobjekt verdeckt wird;
wobei das Verfahren, wenn das Ergebnis des Erkennens (202) ja ist, **dadurch gekennzeichnet ist, dass** es ferner Folgendes beinhaltet:
Feststellen, ob eine Klingelzeit entsprechend der Wellenformkurve der Nachbeben größer als eine vorbestimmte Klingelzeit ist;
Feststellen, dass das das Ultraschallradar verdeckende Fremdobjekt zu einer ersten Fremdobjektdatenbank gehört, als Reaktion darauf, dass die Klingelzeit größer ist als die vorbestimmte Klingelzeit; und
Feststellen, dass das das Ultraschallradar verdeckende Fremdobjekt zu einer zweiten Fremdobjektdatenbank gehört, als Reaktion darauf, dass die Klingelzeit nicht größer ist als die vorbestimmte Klingelzeit; und
Starten eines Fremdobjektreinigungsverfahrens entsprechend einer bestimmten Fremdobjektdatenbank, um das Fremdobjekt vom Ultraschallradar zu entfernen, wobei die bestimmte Fremdobjektdatenbank eine der ersten und zweiten Fremdobjektdatenbanken ist, zu der das Fremdobjekt gehört.

2. Verfahren nach Anspruch 1, wobei die Benachrichtigungsinformation zumindest ein Benachrichtigungssymbol und ein Benachrichtigungszeichen umfasst.

3. Verfahren nach Anspruch 2, wobei das Ausgeben (102) der Benachrichtigungsinformation, die zum Anzeigen konfiguriert ist, dass das Ultraschallradar durch das Fremdobjekt verdeckt wird, Folgendes beinhaltet:
Erfassen (304) einer Zielposition des Ultraschallradars auf einem vorbestimmten Fahrzeugsimulationsbild, das auf einem Anzeigeterminal angezeigt wird;
Ausgeben (305), an der Zielposition, des Benachrichtigungssymbols, das zum Anzeigen konfiguriert ist, dass das Ultraschallradar durch das Fremdobjekt verdeckt wird, und Steuern des Anzeigeterminals zum Ausgeben des Benachrichtigungszeichens in einer vorbestimmten Benachrichtigungsregion, wobei das Benachrichtigungszeichen zum Anzeigen konfiguriert ist, dass das Ultraschallradar durch das Fremdobjekt verdeckt wird.

4. Verfahren nach Anspruch 3, wobei das Erfassen der Zielposition des Ultraschallradars auf dem auf dem Anzeigeterminal angezeigten vorbestimmten Fahrzeugsimulationsbild Folgendes beinhaltet:
Erfassen einer aktuellen Fahrzeuginformation;
Steuern des Anzeigeterminals zum Ausgeben einer Benachrichtigungsschnittstelle, wobei die Benachrichtigungsschnittstelle das vorbestimmte Fahrzeugsimulationsbild entsprechend der aktuellen Fahrzeuginformation umfasst; und
Erfassen der Zielposition entsprechend dem Ultraschallradar auf dem vorbestimmten Fahrzeugsimulationsbild.

5. Verfahren nach Anspruch 3, wobei das Ausgeben, an der Zielposition, des Benachrichtigungssymbols, das zum Anzeigen konfiguriert ist, dass das Ultraschallradar durch das Fremdobjekt verdeckt wird, und das Steuern des Anzeigeterminals zum Ausgeben des Benachrichtigungszeichens in der vorbestimmten Benachrichtigungsregion Folgendes beinhaltet:
Steuern des Anzeigeterminals zum Ausgeben einer Benachrichtigungsschnittstelle, wobei die Benachrichtigungsschnittstelle zumindest das vorbestimmte Fahrzeugsimulationsbild und die mehreren Strahlen umfasst, die um das vorbestimmte Fahrzeugsimulationsbild herum verteilt sind und den Positionen der Ultraschallradare entsprechen;
Bestimmen eines Zielstrahls entsprechend dem durch das Fremdobjekt verdeckten Ultraschallradar aus den mehreren Strahlen um das vorbestimmte Fahrzeugsimulationsbild herum; und
Ausschalten des Zielstrahls und Ausgeben des Benachrichtigungssymbols an der Zielposition entsprechend dem Zielstrahl, um anzuzeigen, dass das Ultraschallradar durch das Fremdobjekt verdeckt wird.

6. Verfahren nach Anspruch 1, wobei das Erfassen (201, 301) einer Wellenformkurve von Nachbeben des Ultraschallradars Folgendes beinhaltet:
Feststellen, ob eine Zeitdifferenz zwischen einer Zeit des Erfassens einer zuletzt erfassten Wellenformkurve von Nachbeben des Ultraschallradars und einer aktuellen Zeit größer als eine vorbestimmte Zeit ist;
Erfassen der Wellenformkurve von Nachbeben des Ultraschallradars zu der aktuellen Zeit als Reaktion darauf, dass die Zeitdifferenz größer als die vorbestimmte Zeit ist; und
Erfassen der zuletzt erfassten Wellenformkurve von Nachbeben des Ultraschallradars als Reaktion darauf, dass die Zeitdifferenz nicht größer als die vorbestimmte Zeit ist.

7. Verarbeitungsvorrichtung (400) auf der Basis eines von durch ein Fremdobjekt verdeckten Ultraschallradars, die Folgendes umfasst:
eine Erkennungseinheit (401), konfiguriert zum Erkennen, ob das Ultraschallradar durch das Fremdobjekt verdeckt wird; und
eine Ausgabeeinheit (402), konfiguriert zum Ausgeben einer Benachrichtigungsinformation, wenn das Ultraschallradar durch das Fremdobjekt verdeckt wird, wobei die Benachrichtigungsinformation konfiguriert ist zum Anzeigen, dass das Ultraschallradar durch das Fremdobjekt verdeckt wird;
wobei die Erkennungseinheit (401) Folgendes umfasst:
eine erste Erfassungssubeinheit (4011), konfiguriert zum Erfassen einer Wellenformkurve von Nachbeben des Ultraschallradars; und
eine Erkennungssubeinheit (4012), konfiguriert zum Erkennen gemäß der Wellenformkurve der Nachbeben, ob das Ultraschallradar durch das Fremdobjekt verdeckt wird;
wobei das Erkennungsmodul (40122), wenn das Ultraschallradar durch das Fremdobjekt verdeckt wird, **dadurch gekennzeichnet ist, dass** es ferner konfiguriert ist zum:
Feststellen, ob eine Klingelzeit entsprechend der Wellenformkurve der Nachbeben größer ist als eine vorbestimmte Klingelzeit;
Feststellen, dass das das Ultraschallradar verdeckende Fremdobjekt zu einer ersten Fremdobjektdatenbank gehört, als Reaktion darauf, dass die Klingelzeit größer ist als die vorbestimmte Klingelzeit;
Feststellen, dass das das Ultraschallradar verdeckende Fremdobjekt zu einer zweiten Fremdobjektdatenbank gehört, als Reaktion darauf, dass die Klingelzeit nicht größer ist als die vorbestimmte Klingelzeit; und
Starten eines Fremdobjektreinigungsverfahrens entsprechend einer bestimmten Fremdobjektdatenbank, um das Fremdobjekt von dem Ultraschallradar zu entfernen, wobei die bestimmte Fremdobjektdatenbank eine der ersten und zweiten Fremdobjektdatenbanken ist, zu der das Fremdobjekt gehört.

8. Vorrichtung (400) nach Anspruch 7, wobei die Benachrichtigungsinformation zumindest ein Benachrichtigungssymbol und ein Benachrichtigungszeichen umfasst.

9. Vorrichtung (400) nach Anspruch 8, wobei die Ausgabeeinheit (402) Folgendes umfasst:
eine zweite Erfassungssubeinheit (4021), konfiguriert zum Erfassen einer Zielposition des Ultraschallradars auf einem auf einem Anzeigeterminal angezeigten vorbestimmten Fahrzeugsimulationsbild;
eine Ausgabesubeinheit (4022), konfiguriert zum Ausgeben, an der Zielposition, des Benachrichtigungssymbols, das zum Anzeigen konfiguriert ist, dass das Ultraschallradar durch das Fremdobjekt verdeckt wird, und zum Steuern des Anzeigeterminals zum Ausgeben des Benachrichtigungszeichens in einer vorgegebenen Benachrichtigungsregion, wobei das Benachrichtigungszeichen zum Anzeigen konfiguriert ist, dass das Ultraschallradar durch das Fremdobjekt verdeckt wird.

10. Vorrichtung (400) nach Anspruch 9, wobei die zweite Erfassungssubeinheit (4022) konfiguriert ist zum:
Erfassen einer aktuellen Fahrzeuginformation;
Steuern des Anzeigeterminals zum Ausgeben einer Benachrichtigungsschnittstelle, wobei die Benachrichtigungsschnittstelle das vorbestimmte Fahrzeugsimulationsbild entsprechend der aktuellen Fahrzeuginformation umfasst; und
Erfassen der Zielposition entsprechend dem Ultraschallradar auf dem vorbestimmten Fahrzeugsimulationsbild.

11. Vorrichtung (400) nach Anspruch 9, wobei die Ausgabesubeinheit (402) konfiguriert ist zum:
Steuern des Anzeigeterminals zum Ausgeben einer Benachrichtigungsschnittstelle, wobei die Benachrichtigungsschnittstelle zumindest das vorbestimmte Fahrzeugsimulationsbild und mehrere Strahlen umfasst, die um das vorbestimmte Fahrzeugsimulationsbild herum verteilt sind und den Positionen der Ultraschallradare entsprechen;
Bestimmen eines Zielstrahls entsprechend dem durch das Fremdobjekt verdeckten Ultraschallradar aus den mehreren Strahlen um das vorbestimmte Fahrzeugsimulationsbild herum; und
Ausschalten des Zielstrahls und Ausgeben des Benachrichtigungssymbols an der Zielposition entsprechend dem Zielstrahl, um anzuzeigen, dass das Ultraschallradar durch das Fremdobjekt verdeckt wird.

12. Vorrichtung (400) nach Anspruch 7, wobei die erste Erfassungssubeinheit (4011) speziell konfiguriert ist zum:
Feststellen, ob eine Zeitdifferenz zwischen einer Zeit des Erfassens einer zuletzt erfassten Wellenformkurve von Nachbeben des Ultraschallradars und einer aktuellen Zeit größer als eine vorbestimmte Zeit ist;
Erfassen der Wellenformkurve von Nachbeben des Ultraschallradars zur aktuellen Zeit als Reaktion darauf, dass die Zeitdifferenz größer als die vorbestimmte Zeit ist; und
Erfassen der zuletzt erfassten Wellenformkurve von Nachbeben des Ultraschallradars als Reaktion darauf, dass die Zeitdifferenz nicht größer als die vorbestimmte Zeit ist.

13. Computerlesbares Speichermedium, konfiguriert zum Speichern eines Computerprogramms, wobei das Computerprogramm von einem Computer zum Durchführen des Verarbeitungsverfahrens nach einem der Ansprüche 1-6 durch eine Vorrichtung nach einem der Ansprüche 7-12 ausgeführt wird.

## Revendications

1. Procédé de traitement sur la base d'un radar à ultrasons recouvert par un corps étranger, comprenant :
une détection (101) du fait que le radar à ultrasons est recouvert ou non par le corps étranger,
comprenant :
une acquisition (201, 301) d'une courbe de forme d'onde de répliques du radar à ultrasons ; et
une détection (202), selon la courbe de forme d'onde de répliques, du fait que le radar à ultrasons est recouvert ou non par le corps étranger,
lorsque le résultat de la détection (202) est oui, une émission (102) d'informations de notification configurées pour indiquer que le radar à ultrasons est recouvert par le corps étranger ;
dans lequel après que le résultat de la détection (202) est oui, le procédé est **caractérisé par** le fait de comprendre en outre :
une détermination du fait qu'un temps de réverbération correspondant à la courbe de forme d'onde des répliques est plus grand qu'un temps de réverbération prédéterminé ;
une détermination du fait que le corps étranger qui recouvre le radar à ultrasons appartient à une première base de données de corps étrangers en réponse au fait que le temps de réverbération est plus grand que le temps de réverbération prédéterminé ; et
une détermination du fait que le corps étranger qui recouvre le radar à ultrasons appartient à une seconde base de données de corps étrangers en réponse au fait que le temps de réverbération n'est pas plus grand que le temps de réverbération prédéterminé ; et
un démarrage d'un procédé de nettoyage de corps étranger correspondant à une base de données de corps étrangers déterminée pour retirer le corps étranger du radar à ultrasons, dans lequel la base de données de corps étrangers déterminée est une parmi les première et seconde bases de données de corps étrangers, à laquelle le corps étranger appartient.

2. Procédé selon la revendication 1, dans lequel les informations de notification comprennent au moins une icône de notification et un caractère de notification.

3. Procédé selon la revendication 2, dans lequel une émission (102) des informations de notification configurées pour indiquer le fait que le radar à ultrasons est recouvert par le corps étranger comprend :
une acquisition (304) d'une position cible du radar à ultrasons sur une image de simulation de véhicule prédéterminée affichée sur un terminal d'affichage ;
une émission (305), au niveau de la position cible, de l'icône de notification configurée pour indiquer que le radar à ultrasons est recouvert par le corps étranger, et une commande du terminal d'affichage pour émettre le caractère de notification dans une région de notification prédéterminée, dans lequel le caractère de notification est configuré pour indiquer que le radar à ultrasons est recouvert par le corps étranger.

4. Procédé selon la revendication 3, dans lequel une acquisition de la position cible du radar à ultrasons sur l'image de simulation de véhicule prédéterminée affichée sur le terminal d'affichage comprend :
une acquisition d'informations de véhicule actuelles ;
une commande du terminal d'affichage pour émettre une interface de notification, l'interface de notification comprenant l'image de simulation de véhicule prédéterminée correspondant aux informations de véhicule actuelles ; et
une acquisition, sur l'image de simulation de véhicule prédéterminée, de la position cible correspondant au radar à ultrasons.

5. Procédé selon la revendication 3, dans lequel une émission, au niveau de la position cible, de l'icône de notification configurée pour indiquer le fait que le radar à ultrasons est recouvert par le corps étranger, et une commande du terminal d'affichage pour émettre le caractère de notification dans la région de notification prédéterminée comprend :
une commande du terminal d'affichage pour émettre une interface de notification, l'interface de notification comprenant au moins l'image de simulation de véhicule prédéterminée et la pluralité de faisceaux étant distribués autour de l'image de simulation de véhicule prédéterminée et correspondant aux positions des radars à ultrasons ;
une détermination d'un faisceau cible, correspondant au radar à ultrasons recouvert par le corps étranger, à partir de la pluralité de faisceaux autour de l'image de simulation de véhicule prédéterminée ;
et
une commande d'une extinction du faisceau cible, et une émission de l'icône de notification au niveau de la position cible correspondant au faisceau cible pour indiquer que le radar à ultrasons est recouvert par le corps étranger.

6. Procédé selon la revendication 1, dans lequel l'acquisition (201, 301) d'une courbe de forme d'onde de répliques du radar à ultrasons, comprend :
une détermination du fait qu'un écart de temps entre un temps d'acquisition d'une dernière courbe de forme d'onde acquise de répliques du radar à ultrasons et un temps actuel est supérieur ou non à un temps prédéterminé ;
une acquisition de la courbe de forme d'onde de répliques du radar à ultrasons au temps actuel en réponse au fait que l'écart de temps est supérieur au temps prédéterminé ; et
une acquisition de la dernière courbe de forme d'onde acquise de répliques du radar à ultrasons en réponse au fait que l'écart de temps n'est pas supérieur au temps prédéterminé.

7. Dispositif de traitement (400) sur la base du fait qu'un radar à ultrasons est recouvert par un corps étranger, comprenant :
une unité de détection (401), configurée pour détecter le fait que le radar à ultrasons est recouvert ou non par le corps étranger ; et
une unité d'émission (402), configurée pour émettre des informations de notification lorsque le radar à ultrasons est recouvert par le corps étranger, les informations de notification étant configurées pour indiquer que le radar à ultrasons est recouvert par le corps étranger ;
dans lequel l'unité de détection (401) comprend :
une première sous-unité d'acquisition (4011), configurée pour acquérir une courbe de forme d'onde de répliques du radar à ultrasons ; et
une sous-unité de détection (4012), configurée pour détecter, selon la courbe de forme d'onde des répliques, le fait que le radar à ultrasons est recouvert ou non par le corps étranger ;
dans lequel après que le radar à ultrasons est recouvert par le corps étranger, le module de détection (40122) est **caractérisé par** le fait d'être en outre configuré pour :
déterminer le fait qu'un temps de réverbération correspondant à la courbe de forme d'onde des répliques est plus grand ou non qu'un temps de réverbération prédéterminé ;
déterminer le fait que le corps étranger qui recouvre le radar à ultrasons appartient à une première base de données de corps étrangers en réponse au fait que le temps de réverbération est plus grand que le temps de réverbération prédéterminé ;
déterminer le fait que le corps étranger qui recouvre le radar à ultrasons appartient à une seconde base de données de corps étrangers en réponse au fait que le temps de réverbération n'est pas plus grand que le temps de réverbération prédéterminé ; et
démarrer un procédé de nettoyage de corps étranger correspondant à une base de données de corps étrangers déterminée pour retirer le corps étranger du radar à ultrasons, dans lequel la base de données de corps étrangers déterminée est une parmi les première et seconde bases de données de corps étrangers, à laquelle le corps étranger appartient.

8. Dispositif (400) selon la revendication 7, dans lequel les informations de notification comprennent au moins une icône de notification et un caractère de notification.

9. Dispositif (400) selon la revendication 8, dans lequel l'unité d'émission (402) comprend :
une seconde sous-unité d'acquisition (4021), configurée pour acquérir une position cible du radar à ultrasons sur une image de simulation de véhicule prédéterminée affichée sur un terminal d'affichage ;
une sous-unité d'émission (4022), configurée pour émettre, au niveau de la position cible, l'icône de notification configurée pour indiquer que le radar à ultrasons est recouvert par le corps étranger, et commander le terminal d'affichage pour émettre le caractère de notification dans une région de notification prédéterminée, dans lequel le caractère de notification est configuré pour indiquer que le radar à ultrasons est recouvert par le corps étranger.

10. Dispositif (400) selon la revendication 9, dans lequel la seconde sous-unité d'acquisition (4022) est configurée pour :
acquérir des informations de véhicule actuelles ;
commander le terminal d'affichage pour émettre une interface de notification, l'interface de notification comprenant l'image de simulation de véhicule prédéterminée correspondant aux informations de véhicule actuelles ; et
acquérir, sur l'image de simulation de véhicule prédéterminée, la position cible correspondant au radar à ultrasons.

11. Dispositif (400) selon la revendication 9, dans lequel la sous-unité d'émission (402) est configurée pour :
commander le terminal d'affichage pour émettre une interface de notification, l'interface de notification comprenant au moins l'image de simulation de véhicule prédéterminée et une pluralité de faisceaux étant distribués autour de l'image de simulation de véhicule prédéterminée et correspondant aux positions des radars à ultrasons ;
déterminer un faisceau cible, correspondant au radar à ultrasons recouvert par le corps étranger, à partir de la pluralité de faisceaux autour de l'image de simulation de véhicule prédéterminée ; et
commander l'extinction du faisceau cible, et émettre l'icône de notification au niveau de la position cible correspondant au faisceau cible pour indiquer que le radar à ultrasons est recouvert par le corps étranger.

12. Dispositif (400) selon la revendication 7, dans lequel la première sous-unité d'acquisition (4011) est spécifiquement configurée pour :
déterminer le fait qu'un écart de temps entre un temps d'acquisition d'une dernière courbe de forme d'onde acquise de répliques du radar à ultrasons et un temps actuel est supérieur ou non à un temps prédéterminé ;
acquérir la courbe de forme d'onde de répliques du radar à ultrasons au temps actuel en réponse au fait que l'écart de temps est supérieur au temps prédéterminé ; et
acquérir la dernière courbe de forme d'onde acquise de répliques du radar à ultrasons en réponse au fait que l'écart de temps n'est pas supérieur au temps prédéterminé.

13. Support de stockage lisible par ordinateur, configuré pour stocker un programme informatique, le programme informatique étant exécuté par un ordinateur pour réaliser le procédé de traitement selon l'une quelconque des revendications 1 à 6 par un dispositif selon l'une quelconque des revendications 7 à 12.
